# FASCICULE DE BREVET EUROPEEN

(11) **EP 4 240 957 B1**
(45) Date de publication et mention de la délivrance du brevet: **01.01.2025**
(21) Numéro de dépôt: 21815238.7
(22) Date de dépôt: 03.11.2021
(51) Int. Cl.: F02K 1/04, F02K 1/80

(54) **ENSEMBLE POUR UNE TURBOMACHINE**
ANORDNUNG FÜR EINE TURBOMASCHINE
ASSEMBLY FOR A TURBOMACHINE

(30) Priorité: 05.11.2020 FR 2011382
(43) Date de publication de la demande: 13.09.2023
(73) Titulaire: Safran Nacelles, 76700 Gonfreville-l'Orcher (FR)
(72) Inventeur: JORET, Jean-Philippe, 77550 MOISSY-CRAMAYEL (FR); DEVANLAY, Vincent, 77550 MOISSY-CRAMAYEL (FR); BRAVIN, Fabien, 77550 MOISSY-CRAMAYEL (FR); MALOT, Hélène, 77550 MOISSY-CRAMAYEL (FR)
(74) Mandataire: Ernest Gutmann - Yves Plasseraud S.A.S.
(86) Numéro de dépôt international: PCT/FR2021/051937
(87) Numéro de publication internationale: WO 2022/096823

(56) Documents cités:
- FR-A1- 2 914 955
- FR-A1- 3 084 916
- US-A1- 2010 162 725
- US-A1- 2015 322 890

## Description

### Domaine technique de l'invention

L'invention concerne un ensemble pour une turbomachine, en particulier un ensemble d'éjection pour un turboréacteur ou un turbopropulseur d'avion.

### Etat de la technique antérieure

Un ensemble propulsif pour un aéronef, également appelé système propulsif intégré, comporte classiquement une turbomachine, par exemple un turboréacteur, une nacelle et un mât ou pylône d'accrochage destiné à permettre l'accrochage de l'ensemble propulsif sur une partie structurelle, par exemple sous l'aile, de l'aéronef.

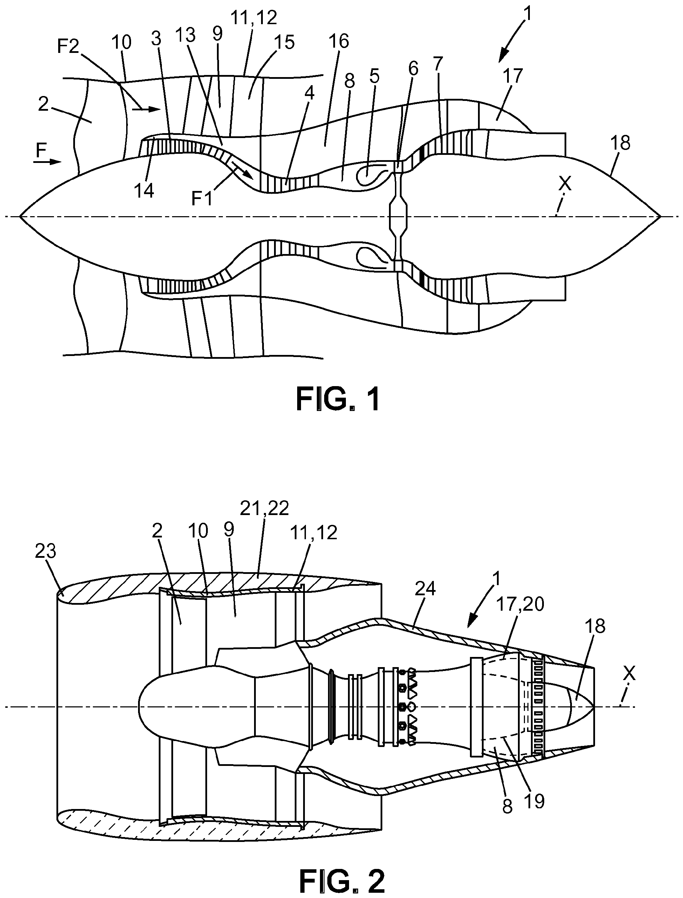

La turbomachine est par exemple un turboréacteur à double flux. Une telle turbomachine 1, illustrée à la figure 1, présente un axe X et comporte de l'amont vers l'aval dans le sens de circulation des gaz au sein de la turbomachine, une soufflante 2, un compresseur basse pression 3, un compresseur haute pression 4, une chambre de combustion 5, une turbine haute pression 6 et une turbine basse pression 7.

Dans la suite de la description, les termes amont et aval sont définis par rapport au sens de circulation des gaz au sein de la turbomachine.

Par ailleurs, les termes axial, radial et circonférentiel sont définis par rapport à l'axe X de la turbomachine.

L'air F entrant au niveau de la soufflante est divisé en un flux d'air primaire F1 circulant au travers d'une veine dite primaire 8 et en un flux d'air secondaire F2 circulant au travers d'une veine dite secondaire 9, entourant la veine primaire 8. Les compresseurs basse et haute pression 3, 4, la chambre de combustion 5 et les turbines haute et basse pression 6, 7 sont situés au niveau de la veine primaire 8.

La turbine haute pression 6 entraîne le compresseur haute pression 4 par l'intermédiaire d'un arbre dit haute pression. La turbine basse pression 7 entraîne le compresseur basse pression 3 et la soufflante 2, au travers d'un arbre dit basse pression et éventuellement au travers d'un réducteur de vitesses dans le cas où la vitesse de rotation de la soufflante 2 est plus faible que la vitesse de rotation du compresseur basse pression 3.

La majeure partie de la poussée générée par la turbomachine 1 est produite par le flux secondaire F2, en aval de la soufflante 2.

La soufflante 2 est entourée par un carter de soufflante 10, un carter dit intermédiaire 11 étant situé en aval du carter de soufflante 10. Le carter intermédiaire 11 comporte une virole radialement externe 12 située dans le prolongement du carter de soufflante 10 et une partie dite inter-veine 13, située entre les veine primaire 8 et secondaire 9. La partie inter-veine 13 comporte un bec séparateur 14 à son extrémité amont et est reliée à la virole externe 12 par des bras dit structuraux 15.

La turbomachine 1 comporte par ailleurs un carter central 16, situé en aval de la partie inter-veine 13 du carter intermédiaire 11, et un carter d'échappement 17, situé en aval du carter central 16 et sur lequel est rapporté un cône d'éjection 18. Comme cela est mieux visible à la figure 2, le carter d'échappement 17 comporte une virole radialement interne 19 et une virole radialement externe 20, reliées par des pales s'étendant radialement. Les viroles interne 19 et externe 20 du carter d'échappement 17 ou carter moteur délimitent entre elles l'extrémité aval de la veine primaire 8.

Comme illustré à la figure 2, la nacelle 21 de l'ensemble propulsif comporte classiquement une nacelle de soufflante 22, entourant la soufflante 2 ainsi que le carter de soufflante 10 et la virole externe 12 du carter intermédiaire 11. La nacelle de soufflante 22 forme une lèvre d'entrée d'air 23 à son extrémité amont. La nacelle 21 comporte en outre une nacelle de moteur 24 entourant les zones de la turbomachine 1 comportant le compresseur haute pression 4, la chambre de combustion 5, la turbine haute pression 6, et la turbine basse pression 7 notamment.

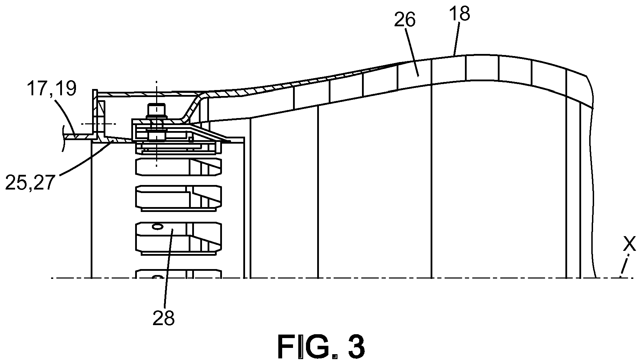

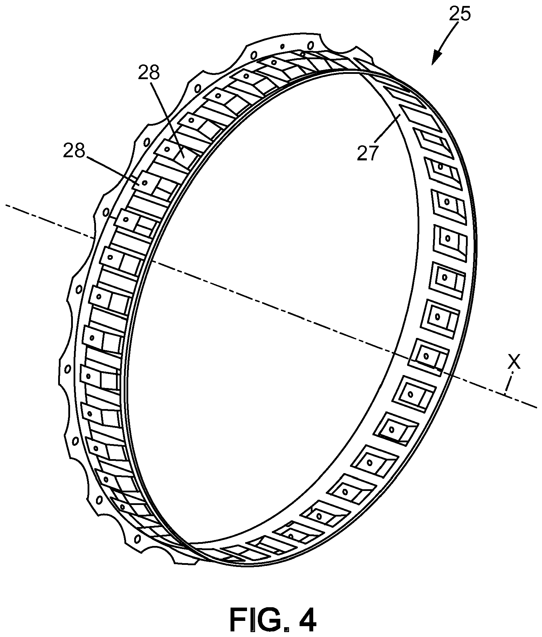

Comme cela est illustré à la figure 3 et est connu du document FR 3 084 916 au nom de la Demanderesse, l'extrémité amont du cône d'éjection 18 est reliée à l'extrémité aval de la virole interne 19 du carter d'échappement 17 par l'intermédiaire d'une bride de liaison annulaire 25 (visible également à la figure 4). Le cône 18 est généralement réalisé en matériau composite à matrice céramique, également désigné sous l'acronyme anglais CMC. Le cône 18 peut par ailleurs comporter une structure acoustique interne 26. La virole interne 19 du carter d'échappement 18 est métallique, par exemple en alliage à base de nickel, par exemple en Inconel.

La bride 25 est métallique, par exemple en alliage à base de nickel (Inconel par exemple), et comporte une partie annulaire 27 d'axe X, à partir de laquelle s'étendent des pattes flexibles 28. Les pattes 28 sont régulièrement réparties sur la circonférence.

De telles pattes souples ou flexibles 28 permettent de compenser les phénomènes de dilatation différentielle intervenant entre la virole interne 19 du carter d'échappement 17 et le cône 18, ces deux éléments 17, 18 étant réalisés dans des matériaux différents.

Une telle bride annulaire 25 est généralement fabriquée par usinage d'un élément brut de grandes dimensions, une telle fabrication étant relativement coûteuse.

### Présentation de l'invention

L'invention vise à remédier à cet inconvénient, de manière simple, fiable et peu onéreuse.

A cet effet, l'invention concerne un ensemble pour une turbomachine comportant un cône d'éjection et un carter d'échappement comportant une virole interne annulaire, le cône d'éjection et le carter d'échappement s'étendant autour d'un axe, le cône d'éjection comportant une surface externe s'étendant dans le prolongement de ladite virole interne, le cône d'éjection étant relié au carter d'échappement par l'intermédiaire d'une bride, ladite bride comportant une partie amont fixée au carter d'échappement et des pattes s'étendant vers l'aval depuis ladite partie amont, le cône d'éjection étant fixé auxdites pattes, caractérisé en ce que la bride est sectorisée et est formée de plusieurs secteurs angulaires agencés circonférentiellement de façon adjacente, chaque secteur de bride comportant au moins une patte s'étendant de façon rectiligne selon un axe parallèle à l'axe du cône.

Il est ainsi possible de réaliser chaque secteur de bride à l'aide d'un élément de matériau brut de plus faibles dimensions que dans le cas de l'art antérieur, ce qui permet de limiter les coûts et les temps d'usinage. Une telle structure permet également la mise en place d'une fabrication en série des secteurs de bride.

Le fait que chaque patte soit plane et s'étende suivant un axe rectiligne parallèle à l'axe du carter d'échappement et du cône, c'est-à-dire parallèle à l'axe de la turbomachine, permet de limiter les contraintes mécaniques dans chaque secteur de bride, et en particulier dans les pattes, de manière à éviter toute dégradation prématurée. Une telle structure des pattes permet également de faciliter la réalisation des secteurs et de limiter l'encombrement de chaque secteur.

Les pattes peuvent être formées par des lames, par exemple planes. Chaque patte peut présenter une épaisseur sensiblement constante. Chaque patte peut présenter une forme générale rectangulaire, vue radialement de l'extérieur vers l'intérieur. Chaque patte peut présenter une section rectangulaire.

Les secteurs adjacents peuvent être agencés bout à bout ou peuvent être régulièrement écartés les uns des autres dans la direction circonférentielle.

Chaque patte peut être souple ou élastiquement déformable dans la direction radiale, de manière à compenser d'éventuels effets de dilatation différentiels entre le cône et le carter d'échappement, lorsque ceux-ci sont réalisés dans des matériaux différents par exemple. L'épaisseur de chaque patte, c'est-à-dire sa dimension dans la direction radiale, est par exemple comprise entre 0,5 mm et 10 mm.

Le cône est par exemple réalisé, au moins en partie, en matériau composite à matrice céramique, également désigné sous l'acronyme anglais CMC. Le carter d'échappement est par exemple réalisé, au moins en partie, en matériau métallique apte à résister à des températures élevées lors du fonctionnement de la turbomachine.

Chaque secteur de bride peut s'étendre sur une plage angulaire inférieure à 180°.

Le nombre de secteurs répartis sur la circonférence peut ainsi être compris entre 0 et 200. Chaque secteur de bride peut comporter entre 1 et 100 pattes, de préférence entre 1 et 10 pattes, de préférence entre 3 et 6 pattes.

L'ensemble peut comporter des moyens de couplage en rotation et/ou de positionnement de chaque secteur de bride.

Les moyens de couplage en rotation et/ou de positionnement peuvent comporter au moins un plot de positionnement formé sur le secteur correspondant, engagé dans un évidement ou un orifice complémentaire du carter d'échappement ou du cône, ou inversement.

Le plot de positionnement peut s'étendre radialement depuis la partie amont de chaque secteur et être engagé dans un évidement ou un orifice de forme complémentaire du carter d'échappement. Bien entendu, l'évidement ou l'orifice peuvent être ménagés dans un élément fixé au carter d'échappement ou au cône.

Les moyens de couplage en rotation et/ou de positionnement peuvent comporter au moins un méplat formé sur le secteur correspondant, venant en appui sur un bord ou une surface plane correspondante du carter d'échappement ou du cône, ou inversement.

Bien entendu, le méplat peut venir en appui sur un bord ou une surface plane correspondante d'un élément fixé au carter d'échappement ou au cône.

Les moyens de couplage en rotation sont aptes à éviter la rotation du secteur correspondant par rapport à un axe perpendiculaire à l'axe du cône et du carter d'échappement, c'est-à-dire par rapport à un axe radial.

Le méplat peut être formé par une zone en saillie s'étendant depuis la partie amont du secteur correspondant et peut venir en appui sur un bord ou une zone plane correspondante du carter d'échappement ou d'un élément fixé audit carter d'échappement.

Pour chaque secteur, les moyens de couplage en rotation et/ou de positionnement peuvent comporter deux méplats, formés par exemple par deux zones en saillie, écartés circonférentiellement l'un de l'autre.

Le cône peut comporter une peau radialement interne et une peau radialement externe, délimitant entre elles un caisson la peau externe formant au moins en partie ladite surface externe du cône d'éjection.

Le caisson peut être un caisson acoustique.

Le caisson acoustique permet de limiter les nuisances sonores dues à l'écoulement des gaz issus de la turbine.

La peau radialement interne et la peau radialement externe peuvent être reliées par au moins une paroi s'étendant radialement.

La peau radialement externe peut s'étendre axialement vers l'amont jusqu'au carter d'échappement, les secteurs de bride étant situées radialement à l'intérieur de la peau radialement externe, les pattes étant fixées à la peau radialement interne.

L'extrémité amont de la peau externe peut alors être écarté d'un jeu limité par rapport au carter d'échappement.

Un joint annulaire peut s'étendre entre le carter d'échappement et la peau externe, de façon à éviter l'introduction d'air de fuite au travers du jeu précité.

La partie amont de chaque secteur peut être fixée sur une partie aval radiale ou axiale du carter d'échappement, directement ou par l'intermédiaire d'un élément de liaison.

L'élément de liaison peut présenter une section en L.

La partie amont de chaque secteur peut être fixée au carter d'échappement par l'intermédiaire d'au moins un boulon.

Chaque patte de chaque secteur peut être fixée au cône d'échappement par l'intermédiaire d'au moins un boulon.

L'invention concerne également une turbomachine comportant au moins un ensemble du type précité.

### Brève description des figures

[Fig. 1] est une vue schématique en coupe axiale d'une turbomachine de l'art antérieur,
[Fig. 2] est une vue schématique en coupe axiale d'un ensemble propulsif de l'art antérieur, [Fig. 3] est une vue demie vue en coupe axiale d'une partie d'un ensemble d'éjection de turbomachine de l'art antérieur,
[Fig. 4] est une vue en perspective d'une bride de liaison entre un cône d'éjection et un carter d'échappement, conformément à l'art antérieur,
[Fig. 5] est une vue en section d'une partie d'un ensemble selon l'invention,
[Fig. 6] est une vue en coupe et en perspective d'une partie d'un ensemble selon l'invention, [Fig. 7] est une vue en perspective d'une partie d'un ensemble selon l'invention,
[Fig. 8] est une vue en perspective d'un secteur de bride selon une forme de réalisation de l'invention,
[Fig. 9] est une vue en perspective d'un secteur de bride selon une autre forme de réalisation de l'invention,
[Fig. 10] est une vue schématique en section axiale d'une partie d'une première forme de réalisation de l'ensemble selon l'invention,
[Fig. 11] est une vue correspondant à la figure 10, illustrant une deuxième forme de réalisation de l'invention,
[Fig. 12] est une vue correspondant à la figure 10, illustrant une troisième forme de réalisation de l'invention,
[Fig. 13] est une vue éclatée, en perspective, illustrant le cas d'un secteur comportant une patte unique, selon une première forme de réalisation de l'invention,
[Fig. 14] est une vue en perspective, illustrant le cas d'un secteur comportant une patte unique, selon une première forme de réalisation de l'invention,

### Description détaillée de l'invention

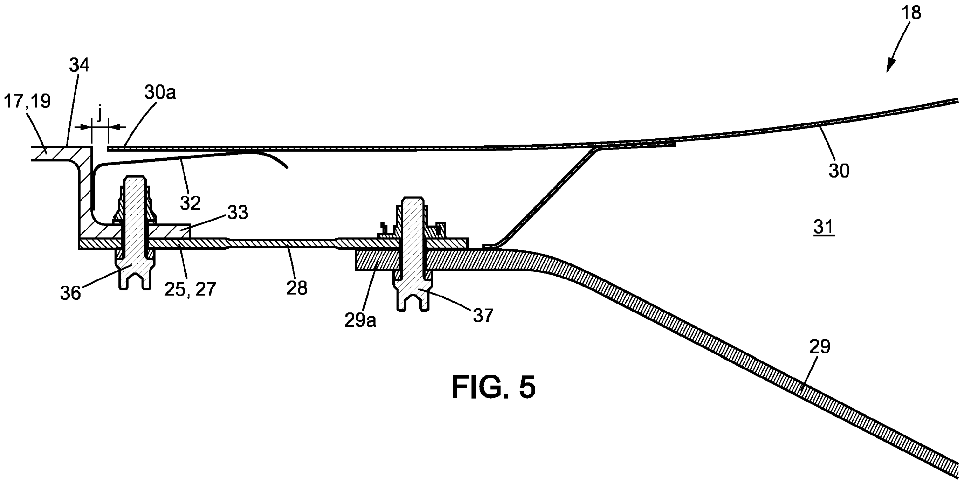

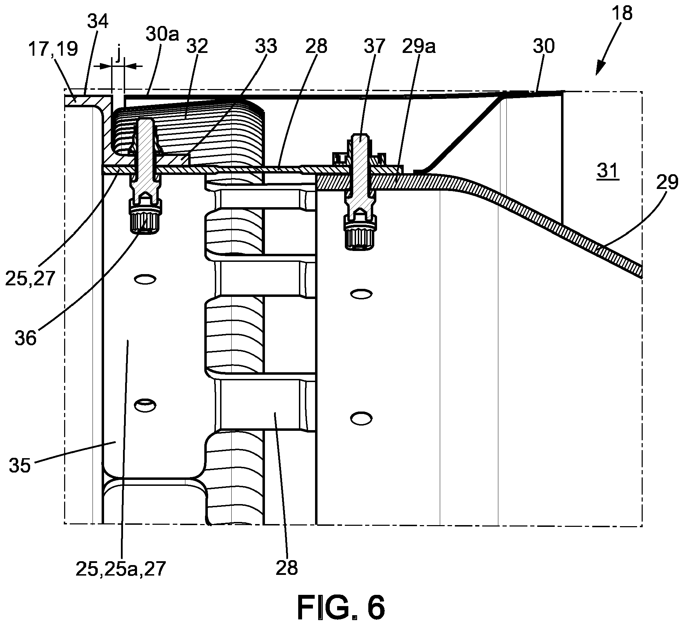

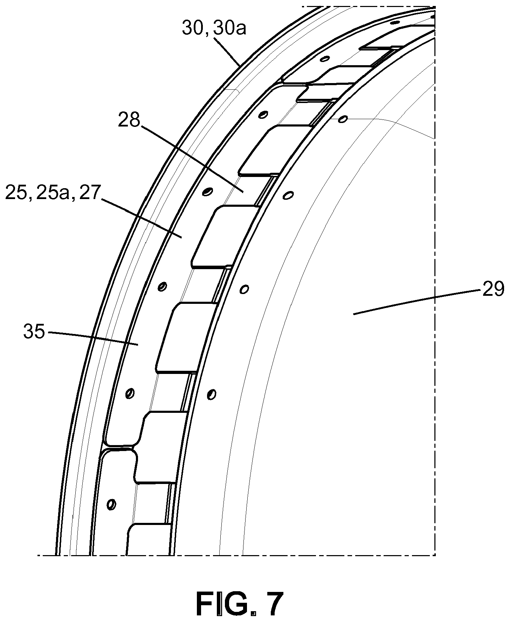

Les figures 5 à 8 illustrent un ensemble d'échappement pour une turbomachine 1 d'aéronef selon une forme de réalisation de l'invention. Cet ensemble comporte un carter d'échappement 17 comportant, comme précédemment, une virole annulaire radialement externe interne 19 et une virole annulaire radialement externe 20, reliées par des pales radiales. Seule la virole interne 19 est illustrée aux figures 6 et 7.

L'ensemble comporte en outre un cône d'éjection 18 comportant une peau radialement interne 29 et une peau radialement externe 30, délimitant entre elles un caisson, par exemple un caisson acoustique 31. La peau radialement externe 30 est une peau dite acoustique et s'étend axialement vers l'amont jusqu'à la virole interne 19 du carter d'échappement 17. L'extrémité amont 30a de la peau externe 30 est écarté d'un jeu j axial au moins égal à 0,2 mm, par exemple, par rapport au carter d'échappement 17.

Un joint annulaire 32 s'étend entre l'extrémité aval de la virole interne 19 du carter d'échappement 17 et la peau externe 30, de façon à éviter l'introduction d'air de fuite au travers du jeu j précité.

L'extrémité aval de ladite virole interne 19 comporte un rebord annulaire 33 s'étendant axialement, décalé radialement vers l'intérieur par rapport à la surface radialement externe 34 de la virole interne 17 destinée à délimitée la veine primaire 8.

Une bride annulaire 25 sectorisé relie le rebord annulaire 33 et l'extrémité amont 29a de la peau interne 29 du cône d'éjection 18.

La bride 25 est formée de plusieurs secteurs angulaires 25a agencés circonférentiellement bout à bout, chaque secteur de bride 25a comportant une partie amont 35 s'étendant circonférentiellement à partir de laquelle une ou plusieurs pates 28 planes s'étendent de façon rectiligne selon un axe parallèle à l'axe X du cône 18. Les pattes 28 sont régulièrement réparties sur la circonférence de la bride 25.

La partie amont 35 de chaque secteur 25a est fixé au rebord 33 par l'intermédiaire de moyens de fixation comprenant par un exemple un ou plusieurs boulons 36, ici 4 boulons régulièrement répartis dans la direction circonférentielle et illustrés parfois schématiquement par des traits d'axes.

L'extrémité aval de chaque patte 28 est fixée à l'extrémité amont 29a de la peau interne 29 du cône 18 par l'intermédiaire de moyens de fixation comprenant par un exemple un ou plusieurs boulons 37, ici un unique boulon, représenté parfois par des traits d'axe. Bien entendu, des moyens de fixation par rivets ou par soudage sont également possibles pour la fixation de la partie amont 35 ou des pattes 28 de chaque secteur 25a.

Le nombre de pattes 28 par secteur 25a est ici égal à 4, chaque bride 25 comportant 8 secteurs.

Chaque patte 28 présente une épaisseur sensiblement constante, une section de forme rectangulaire et une forme générale rectangulaire, vue radialement de l'extérieur vers l'intérieur.

Les pattes 28 sont suffisamment souples et flexibles pour être déformables élastiquement et permettre de compenser les effets de dilatation différentiels entre le cône 18 et le carter d'échappement 17. En effet, le carter d'échappement 17 est par exemple réalisé en matériau métallique, par exemple en alliage à base de nickel, par exemple en Inconel. Les peaux 29, 30 du cône 18 sont par exemple réalisées en matériau composite à matrice céramique, les différences de matériau générant de telles dilatations différentielles en fonction de la température en fonctionnement.

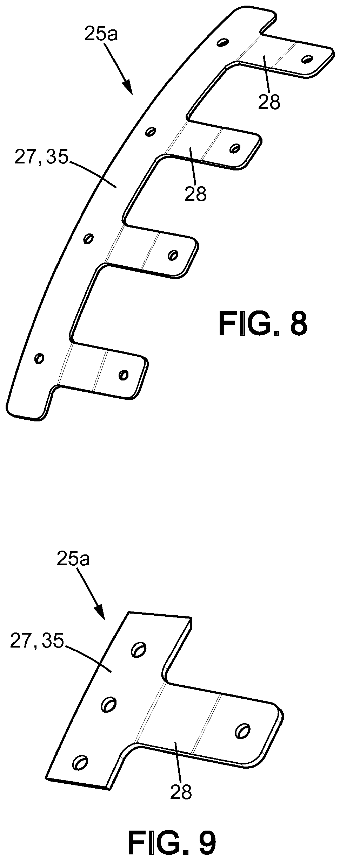

La figure 9 illustre une forme de réalisation où chaque secteur 25a comporte une seule patte 28, le nombre de secteurs 25a de la bride 25 étant alors compris entre 1 et 200. Dans cette forme de réalisation, la partie amont 35 est fixée au carter 17 par l'intermédiaire d'au moins deux boulons 36.

On notera que la présence d'au moins deux boulons 36 pour la fixation de la partie amont 35 permet d'immobiliser en rotation chaque secteur 25a par rapport à un axe perpendiculaire à l'axe X du carter d'échappement 17 et du cône 18, c'est-à-dire par rapport à un axe ou une direction radiale.

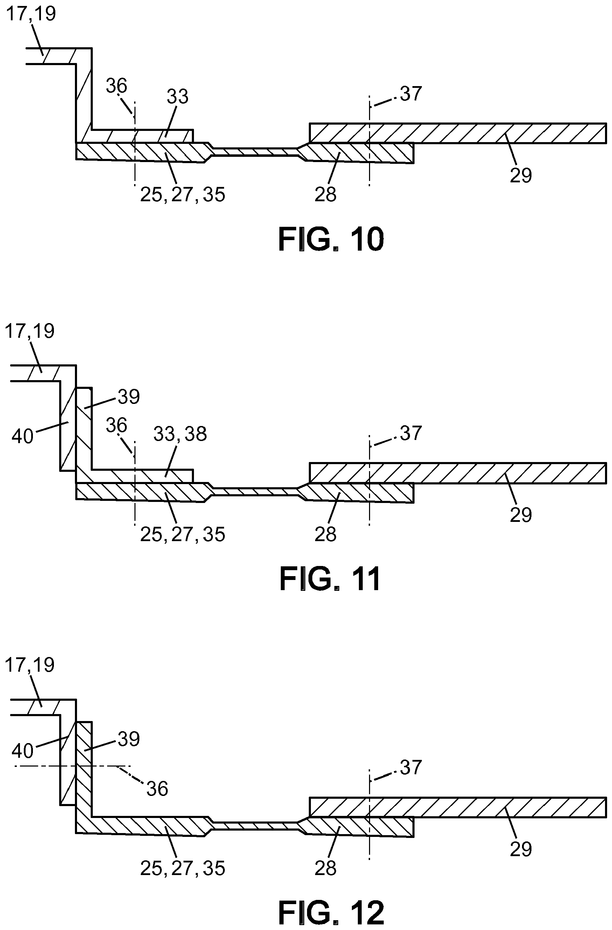

La figure 10 illustre schématiquement le montage des secteurs 25a de bride 25 par rapport à l'extrémité aval de la virole interne 19 du carter 17, d'une part, et par rapport à la peau interne 29 du cône 18, d'autre part.

La figure 11 illustre une autre forme de réalisation, où le rebord axial 33 est formé par un élément de liaison intermédiaire 38. Cet élément 38 comporte une partie annulaire radiale 39, fixée par tous moyens approprié à une partie annulaire radiale 40 de l'extrémité aval de la virole interne 19, et une partie annulaire axiale ou cylindrique, formant le rebord 33 servant à la fixation de la partie amont 35 de chaque secteur 25a.

La figure 12 illustre encore une autre forme de réalisation dans laquelle l'extrémité amont 35 de chaque secteur 25a compote un rebord radial 39 s'étendant radialement vers l'extérieur, fixé à une partie annulaire radiale 40 de l'extrémité aval de la virole interne 19 du carter d'échappement 17.

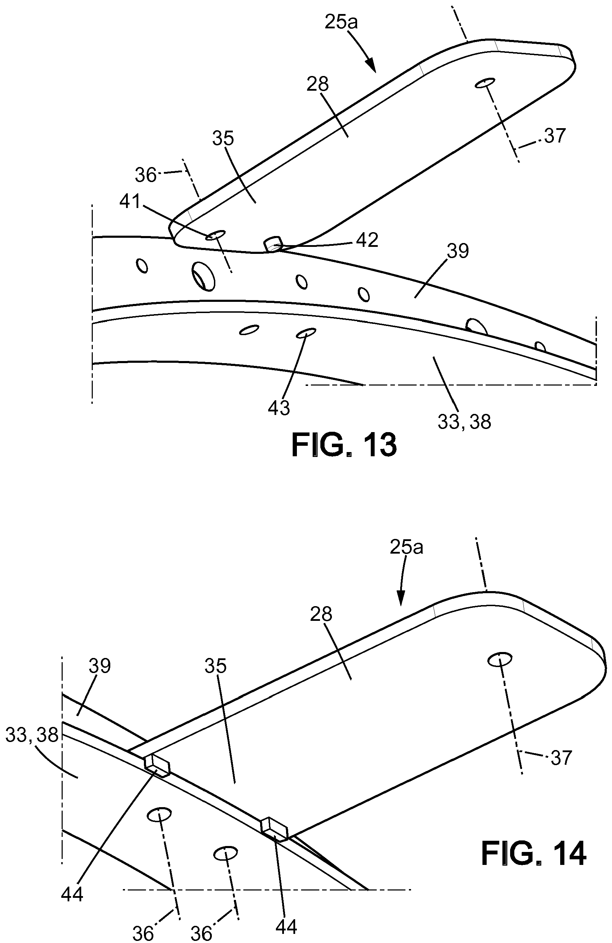

Les figures 13 et 14 illustrent chacune une forme de réalisation dans laquelle chaque secteur 25a comporte une seule patte 28.

Dans la forme de réalisation de la figure 13, la partie amont 35 comporte un trou 41 permettant le passage d'un moyen de fixation, par exemple une vis d'un boulon 36, et un plot 42 engagé dans un orifice ou un évidement 43 de forme complémentaire du rebord 33, le moyen de fixation 36 étant décalé circonférentiellement du plot 42. Le moyen de fixation 36, l'orifice 42 et l'évidement 43 forment ainsi des moyens permettant d'empêcher la rotation du secteur 25a par rapport à un axe ou une direction radiale.

Dans la forme de réalisation de la figure 14, la partie amont 35 comporte deux méplats formés par des plots 44 s'étendant radialement vers l'intérieur par exemple. Les plots 44 sont écartés circonférentiellement l'un de l'autre et sont en appui sur le bord aval du rebord axial 33. La partie amont 35 comporte également des moyens de fixation, formés par un ou plusieurs boulons 37 par exemple.

## Revendications

1. Ensemble pour une turbomachine (1) comportant un cône d'éjection (18) et un carter d'échappement (17) comportant une virole interne annulaire (19), le cône d'éjection (18) et le carter d'échappement (17) s'étendant autour d'un axe (X), le cône d'éjection (18) comportant une surface externe s'étendant dans le prolongement de ladite virole interne (19), le cône d'éjection (18) étant relié au carter d'échappement (17) par l'intermédiaire d'une bride (25), ladite bride (25) comportant une partie amont fixée (35) au carter d'échappement (17) et des pattes (28) s'étendant vers l'aval depuis ladite partie amont (35), le cône d'éjection (18) étant fixé auxdites pattes (28), **caractérisé en ce que** la bride (25) est sectorisée et est formée de plusieurs secteurs (25a) angulaires agencés circonférentiellement de façon adjacente, chaque secteur de bride (25a) comportant au moins une patte (28) s'étendant de façon rectiligne selon un axe parallèle à l'axe (X) du cône (18).

2. Ensemble selon la revendication 1, **caractérisé en ce que** chaque secteur de bride (25a) s'étend sur une plage angulaire inférieure à 180°

3. Ensemble selon la revendication 1 ou 2, **caractérisé en ce que** chaque secteur de bride (25a) comporte entre 1 et 100 pattes (28), de préférence entre 1 et 10 pattes (28), de préférence entre 3 et 6 pattes (28).

4. Ensemble selon l'une des revendications 1 à 3, **caractérisé en ce qu'**il comporte des moyens de couplage en rotation et/ou de positionnement (36, 42, 44) de chaque secteur de bride (25a).

5. Ensemble selon la revendication 4, **caractérisé en ce que** les moyens de couplage en rotation et/ou de positionnement comportent au moins un plot de positionnement (42) formé sur le secteur (25a) correspondant, engagé dans un évidement ou un orifice complémentaire (43) du carter d'échappement (17) ou du cône (18), ou inversement.

6. Ensemble selon la revendication 4 ou 5, **caractérisé en ce que** les moyens de couplage en rotation et/ou de positionnement comportent au moins un méplat (44) formé sur le secteur (25a) correspondant, venant en appui sur un bord ou une surface plane correspondante (33) du carter d'échappement (17) ou du cône, ou inversement.

7. Ensemble selon l'une des revendications 1 à 3, **caractérisé en ce que** le cône (18) comporte une peau radialement interne (29) et une peau radialement externe (30), délimitant entre elles un caisson (31), la peau externe (30) formant au moins en partie ladite surface externe du cône d'éjection (18).

8. Ensemble selon la revendication 7, **caractérisé en ce que** la peau radialement externe (30) s'étend axialement vers l'amont jusqu'au carter d'échappement (17), les secteurs de bride (25a) étant situés radialement à l'intérieur de la peau radialement externe (30), les pattes (28) étant fixées à la peau radialement interne (29).

9. Ensemble selon l'une des revendications 1 à 8, **caractérisé en ce que** la partie amont (35) de chaque secteur (25a) est fixée sur une partie aval radiale (40) ou axiale (33) du carter d'échappement (17), directement ou par l'intermédiaire d'un élément de liaison (38).

10. Turbomachine (1) comportant au moins un ensemble selon l'une des revendications 1 à 9.

## Patentansprüche

1. Anordnung für eine Turbomaschine bzw. ein Turbotriebwerk (1) mit einem Ausstoßkonus (18) und einem Austrittsgehäuse (17), das einen inneren Mantelring (19) aufweist, wobei sich der Ausstoßkonus (18) und das Austrittsgehäuse (17) um eine Achse (X) herum erstrecken, wobei der Ausstoßkonus (18) eine Außenfläche aufweist, die sich in Fortsetzung des inneren Mantelrings (19) erstreckt, wobei der Ausstoßkonus (18) über einen Flansch (25) mit dem Austrittsgehäuse (17) verbunden ist, wobei der Flansch (25) einen stromaufwärtigen Abschnitt (35), der an das Austrittsgehäuse (17) befestigt ist, und Laschen (28) aufweist, die sich von dem stromaufwärtigen Abschnitt (35) stromabwärts erstrecken, wobei der Ausstoßkonus (18) an die Laschen (28) befestigt ist,
**dadurch gekennzeichnet, dass** der Flansch (25) sektorisiert und aus mehreren Winkelsektoren (25a) gebildet ist, die in Umfangsrichtung aneinandergrenzend angeordnet sind, wobei jeder Flanschsektor (25a) zumindest eine Lasche (28) aufweist, die sich geradlinig entlang einer Achse parallel zur Achse (X) des Konus (18) erstreckt.

2. Anordnung nach Anspruch 1,
**dadurch gekennzeichnet, dass** sich jeder Flanschsektor (25a) über einen Winkelbereich von weniger als 180° erstreckt.

3. Anordnung nach Anspruch 1 oder 2,
**dadurch gekennzeichnet, dass** jeder Flanschsektor (25a) zwischen 1 und 100 Laschen (28), vorzugsweise zwischen 1 und 10 Laschen (28), besonders bevorzugt zwischen 3 und 6 Laschen (28), aufweist.

4. Anordnung nach einem der Ansprüche 1 bis 3,
**dadurch gekennzeichnet, dass** sie Mittel (36, 42, 44) zur Drehkopplung und/oder Positionierung jedes Flanschsektors (25a) aufweist.

5. Anordnung nach Anspruch 4,
**dadurch gekennzeichnet, dass** die Mittel zur Drehkopplung und/oder Positionierung zumindest einen Positionierungszapfen (42) umfassen, der an dem entsprechenden Sektor (25a) ausgebildet und in eine Ausnehmung oder eine komplementäre Aussparung (43) des Austrittsgehäuses (17) oder des Konus (18) eingreift, oder umgekehrt.

6. Anordnung nach Anspruch 4 oder 5,
**dadurch gekennzeichnet, dass** die Mittel zur Drehkopplung und/oder Positionierung zumindest eine Abflachung (44) umfassen, die an dem entsprechenden Sektor (25a) ausgebildet ist und an einer Kante oder einer entsprechenden ebenen Fläche (33) des Austrittsgehäuses (17) oder des Konus zur Anlage kommt, oder umgekehrt.

7. Anordnung nach einem der Ansprüche 1 bis 3,
**dadurch gekennzeichnet, dass** der Konus (18) eine radial innere Haut (29) und eine radial äußere Haut (30) aufweist, die zwischen sich einen Kasten (31) begrenzen, wobei die äußere Haut (30) zumindest teilweise die Außenfläche des Ausstoßkonus (18) bildet.

8. Anordnung nach Anspruch 7,
**dadurch gekennzeichnet, dass** sich die radial äußere Haut (30) axial stromaufwärts bis zum Austrittsgehäuse (17) erstreckt, wobei die Flanschsektoren (25a) radial innerhalb der radial äußeren Haut (30) angeordnet sind und die Laschen (28) an die radial innere Haut (29) befestigt sind.

9. Anordnung nach einem der Ansprüche 1 bis 8,
**dadurch gekennzeichnet, dass** der stromaufwärtige Abschnitt (35) jedes Sektors (25a) an einen radial (40) oder axial (33) stromabwärtigen Abschnitt des Austrittsgehäuses (17) befestigt ist, und zwar direkt oder über ein Verbindungselement (38).

10. Turbomaschine bzw. Turbotriebwerk (1) mit zumindest einer Anordnung nach einem der Ansprüche 1 bis 9.

## Claims

1. Assembly for a turbomachine (1) including an exhaust cone (18) and an exhaust case (17) including an annular inner shell (19), the exhaust cone (18) and the exhaust case (17) extending about an axis (X), the exhaust cone (18) including an outer surface extending in the projection of said inner shell (19), the exhaust cone (18) being connected to the exhaust case (17) via a flange (25), said flange (25) including an upstream portion (35) fastened to the exhaust case (17) and lugs (28) extending downstream from said upstream portion (35), the exhaust cone (18) being fastened to said lugs (28), **characterized in that** the flange (25) is segmented and consists of several angular segments (25a) arranged circumferentially adjacent, each flange segment (25a) including at least one lug (28) extending in a rectilinear manner along an axis parallel with the axis (X) of the cone (18).

2. Assembly according to claim 1, **characterized in that** each flange segment (25a) extends over an angular range less than 180°

3. Assembly according to claim 1 or 2, **characterized in that** each flange segment (25a) includes between 1 and 100 lugs (28), preferably between 1 and 10 lugs (28), preferably between 3 and 6 lugs (28).

4. Assembly according to one of claims 1 to 3, **characterized in that** it includes means for coupling in rotation and/or positioning (36, 42, 44) each flange segment (25a).

5. Assembly according to claim 4, **characterized in that** the means for coupling in rotation and/or positioning include at least one positioning stud (42) formed on the corresponding segment (25a), engaged in a complementary recess or orifice (43) of the exhaust case (17) or the cone (18), or vice versa.

6. Assembly according to claim 4 or 5, **characterized in that** the means for coupling in rotation and/or positioning include at least one flat section (44) formed on the corresponding segment (25a), pressing on an edge or a corresponding planar surface (33) of the exhaust case (17) or the cone, or vice versa.

7. Assembly according to one of claims 1 to 3, **characterized in that** the cone (18) includes a radially inner skin (29) and a radially outer skin (30), defining a chamber (31) between them, the outer skin (30) forming at least partially said outer surface of the exhaust cone (18).

8. Assembly according to claim 7, **characterized in that** the radially outer skin (30) extends axially toward the upstream to the exhaust case (17), the flange segments (25a) being located radially inside the radially outer skin (30), the lugs (28) being fastened to the radially inner skin (29).

9. Assembly according to one of claims 1 to 8, **characterized in that** the upstream portion (35) of each segment (25a) is fastened onto a radial (40) or axial (33) downstream portion of the exhaust case (17), directly or via a connecting element (38).

10. Turbomachine (1) including at least one assembly according to one of claims 1 to 9.
